(19) Europäisches Patentamt / European Patent Office / Office européen des brevets

(11) **EP 3 885 941 A1**

(12) **EUROPEAN PATENT APPLICATION**

(43) Date of publication:
   **29.09.2021 Bulletin 2021/39**

(51) Int Cl.:
   **G06F 17/11** *(2006.01)*   **G06N 5/00** *(2006.01)*

(21) Application number: **21153975.4**

(22) Date of filing: **28.01.2021**

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**
   Designated Validation States:
   **KH MA MD TN**

(30) Priority: **23.03.2020   JP 2020051122**

(71) Applicant: **FUJITSU LIMITED**
   **Kanagawa 211-8588 (JP)**

(72) Inventor: **Kawano, Hiroyasu**
   **Kanagawa, 211-8588 (JP)**

(74) Representative: **Hoffmann Eitle**
   **Patent- und Rechtsanwälte PartmbB**
   **Arabellastraße 30**
   **81925 München (DE)**

(54) **INFORMATION PROCESSING APPARATUS, SPECIFYING METHOD, AND SPECIFYING PROGRAM**

(57)    A method includes: calculating a reference solution and a reference value by solving an optimization problem using a dedicated solver based on a first parameter, the reference solution being specified by a plurality of bits in an objective function, the reference value being an energy value of the objective function associated with the reference solution; calculating an annealing solution and an annealing value by solving the optimization problem based on a plurality of second parameters, the annealing solution being specified by the plurality of bits, the annealing value being an energy value of the objective function associated with the annealing solution; and specifying a parameter to be used to solve the optimization problem by using a Hamming distance between a first bit state of the reference solution and a second bit state of the annealing solution and a difference between the annealing value and the reference value.

FIG. 7

**Description**

FIELD

The present embodiment relates to an information processing apparatus and the like.

BACKGROUND

In the case of solving a combinatorial optimization problem, it is common to use a dedicated solver such as OR-Tools, CPLEX, and Gurobi. In the case of using a dedicated solver, while an optimum solution may be obtained, it normally takes a long time to calculate the optimum solution.

Meanwhile, it is possible to perform calculation in a shorter time while maintaining the accuracy of the optimum solution by using an annealing machine instead of the dedicated solver. In the case of using the annealing machine, a plurality of parameters of the annealing machine is adjusted to approach the value of the objective function (hereinafter referred to as energy value) reached by the dedicated solver by optimization, thereby solving the optimization problem.

At the time of executing the optimization calculation, a binary variable (bit) represented by 0 or 1 is used. Accordingly, the optimum solution includes an energy value and a bit state indicating a composition of a solution. For example, in the case of an optimization problem related to product production, a combination of a type, quantity, and the like of a product to be produced may be determined from the bit state of the optimum solution obtained by the dedicated solver or the annealing machine.

In the following descriptions, the optimum solution of the optimization problem obtained by the dedicated solver will be referred to as a "reference solution". The optimum solution of the optimization problem obtained by the annealing machine will be referred to as an "annealing solution".

SUMMARY

[TECHNICAL PROBLEM]

However, according to the conventional technique described above, the bit state of the reference solution may be different from the bit state of the annealing solution even when the energy value of the optimum solution obtained by the dedicated solver and the energy value of the optimum solution obtained by the annealing machine are the same.

For example, a mechanism, an arrangement, equipment, and an operation system of a production site of a product are optimized on the basis of the reference solution obtained by the dedicated solver that has been used. Therefore, even when the energy value of the optimum solution is the same as that of the dedicated solver, the mechanism, arrangement, equipment, and operation system of the production site of the product needs to change with the bit state of the annealing solution being different from the bit state of the reference solution, which is difficult to handle. For example, it may cause surplus costs and increase man-hours due to various changes in the production site.

In one aspect, provided is a solution to bring a bit state of an annealing solution in the case of solving an optimization problem using an annealing machine close to a bit state of a reference solution in the case of solving the optimization problem using a dedicated solver.

[SOLUTION TO PROBLEM]

According to an aspect of the embodiments, a specifying method implemented by a computer includes: calculating a reference solution and a reference value by solving an optimization problem using a dedicated solver on the basis of a first parameter, the reference solution being specified by a plurality of bits included in an objective function of the optimization problem, the reference value being an energy value of the objective function corresponding to the reference solution; calculating an annealing solution and an annealing value by solving the optimization problem using an annealing machine on the basis of a plurality of second parameters, the annealing solution being specified by the plurality of bits, the annealing value being an energy value of the objective function corresponding to the annealing solution; and specifying, among the plurality of second parameters, a parameter to be used in a case of solving the optimization problem using the annealing machine, the specifying of the parameter being performed by using a Hamming distance between a first bit state of the plurality of bits in the reference solution and a second bit state of the plurality of bits in the annealing solution and a difference between the annealing value and the reference value.

[ADVANTAGEOUS EFFECTS OF INVENTION]

According to one aspect of the present invention, a bit state of an annealing solution in the case of solving an optimization problem using an annealing machine may be brought close to a bit state of a reference solution in the case of solving the optimization problem using a dedicated solver.

BRIEF DESCRIPTION OF DRAWINGS

FIG. 1 is a chart (1) for explaining a reference technique;
FIG. 2 is a chart (2) for explaining the reference technique;
FIG. 3 is a chart (3) for explaining the reference technique;
FIG. 4 is a chart for explaining a primary screening;
FIG. 5 is a chart for explaining a secondary screening;
FIG. 6 is a table for explaining validity of seeds selected by an information processing apparatus;
FIG. 7 is a functional block diagram illustrating a configuration of an information processing apparatus according to the present embodiment;
FIG. 8 is a diagram illustrating an exemplary data structure of a second calculation result table;
FIG. 9 is a diagram illustrating an exemplary data structure of a primary screening table;
FIG. 10 is a diagram illustrating an exemplary data structure of a secondary screening table;
FIG. 11 is a flowchart (1) illustrating a processing procedure of the information processing apparatus according to the present embodiment;
FIG. 12 is a flowchart (2) illustrating a processing procedure of the information processing apparatus according to the present embodiment; and
FIG. 13 is a diagram illustrating an exemplary hardware configuration of a computer that implements functions similar to those of the information processing apparatus according to the present embodiment.

DESCRIPTION OF EMBODIMENTS

Hereinafter, an embodiment of an information processing apparatus, a specifying method, and a specifying program disclosed in the present application will be described in detail with reference to the accompanying drawings. Note that the embodiment is not limited to the present embodiment.

[Embodiment]

Prior to describing the present embodiment, a reference technique will be described. At the time of solving an optimization problem with an annealing machine, while various parameters are set and adjusted according to the characteristics of the optimization problem, there may be multiple local solutions having approximate energy values. In a case where multiple local solutions exist, even if the effective energy value (e.g., rounding to two decimal places) is the same, a bit state of a reference solution and a bit state of an annealing solution may be different depending on which parameter is set and how. Note that examples of a parameter include a seed, a start temperature, a temperature drop gradient, the number of iterations, a calculation time, and the like.
Here, it is conceivable to find an effective parameter in advance in such a manner that the bit state of the annealing solution is made similar to the bit state of the reference solution. For example, for an "optimization problem with similar characteristics", effective parameters found in advance are intensively set and adjusted, whereby the annealing solution with a bit state similar to the bit state of the reference solution may be calculated quickly and efficiently. Here, for example, since similar products are normally produced at the same site, the combination optimization problem handled at one production site is an "optimization problem with similar characteristics".
According to the reference technique, effective parameters for the annealing machine for obtaining an annealing solution having a bit state similar to the bit state of the reference solution are specified according to the following procedure. A device that implements the reference technique will be referred to as a "reference device". The reference device calculates the energy value of the reference solution in advance by solving the optimization problem using a dedicated solver. The energy value of the reference solution will be referred to as a "reference value".
Meanwhile, the reference device prepares multiple parameters. Here, a seed, which is one of the parameters, is focused. Seeds 0 to 9 are set as multiple seeds with different values. The reference device calculates an annealing solution for each seed. The energy value of the annealing solution will be referred to as an "annealing value".

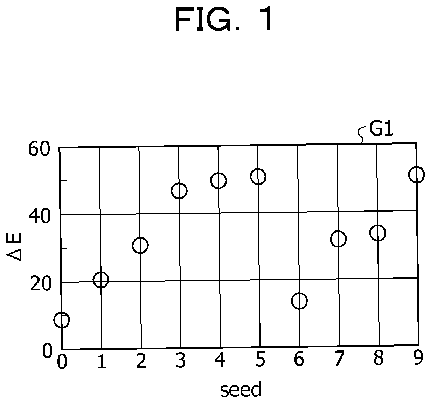

FIG. 1 is a chart (1) for explaining the reference technique. The reference device calculates a difference $\Delta E$ from the reference value for the annealing value of each seed. In FIG. 1, a relationship between each seed and $\Delta E$ is illustrated in a graph G1. The horizontal axis of the graph G1 is an axis corresponding to seeds, and the vertical axis is an axis corresponding to $\Delta E$.

The reference device selects a seed in which ΔE is less than a threshold value. In the example illustrated in FIG. 1, since values of ΔE corresponding to seed 0 and seed 6 are less than the threshold value, the reference device selects seed 0 and seed 6. It indicates that the annealing values calculated using seed 0 and seed 6 are close to the reference value.

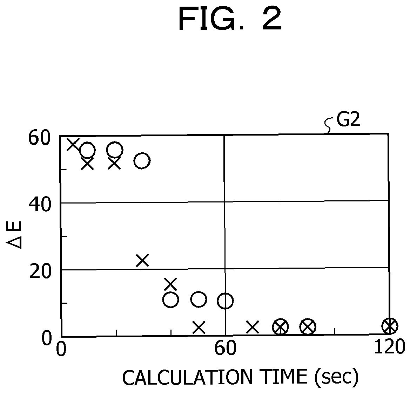

Subsequently, the reference device sets the seed selected as an initial value in the annealing machine, and calculate a solution in such a manner that the value of the objective function approaches the optimum value. FIG. 2 is a chart (2) for explaining the reference technique. In FIG. 2, a relationship between a calculation time for setting the selected seed (seed 0 and seed 6) in the annealing machine and calculating a solution and ΔE is illustrated in a graph G2. The horizontal axis of the graph G2 is an axis corresponding to the calculation time, and the vertical axis is an axis corresponding to ΔE.

A "circle" plot indicates a difference between the annealing value and the reference value at each calculation time in a case where seed 0 is set as an initial value in the annealing machine. An "x" plot indicates a difference between the annealing value and the reference value at each calculation time in a case where seed 6 is set as an initial value in the annealing machine.

As illustrated in FIG. 2, as the calculation time increases, the energy value approaches the optimum value and the value of ΔE decreases. For example, the reference device ends the optimization calculation when the value of ΔE falls below the threshold value.

The reference device converts the bit state of the annealing solution at the time when the optimization calculation is complete into a product type and the number of products. Furthermore, the reference device converts the bit state of the reference solution into a product type and the number of products.

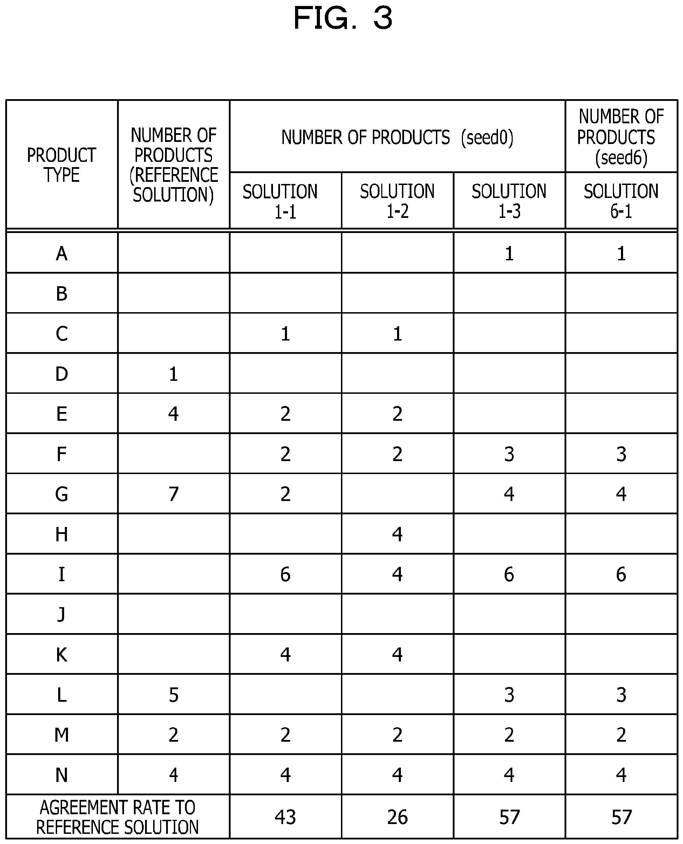

FIG. 3 is a chart (3) for explaining the reference technique. FIG. 3 illustrates, for each product type, a relationship between the number of products based on the reference solution, the number of products based on seed 0, and the number of products based on seed 6. The product types here are "A to N". In the reference solution, product D is "1", product E is "4", product G is "7", product L is "5", product M is "2", and product N is "4".

It is assumed that three types of solutions 1-1 to 1-3 are obtained with seed 0. In the annealing solution 1-1 for seed 0, product C is "1", product E is "2", product F is "2", product G is "2", product I is "6", product K is "4", product M is "2", and product N is "4".

In the solution 1-2 for seed 0, product C is "1", product E is "2", product F is "2", product H is "2", product I is "4", product K is "4", product M is "2", and product N is "4".

In the solution 1-3 for seed 0, product A is "1", product F is "3", product G is "4", product I is "6", product L is "3", product M is "2", and product N is "4".

It is assumed that one type of solution 6-1 is obtained with seed 6. In the solution 6-1 for seed 6, product A is "1", product F is "3", product G is "4", product I is "6", product L is "3", product M is "2", and product N is "4".

The reference device calculates the agreement rate between each solution and the reference solution on the basis of the formula (1). In the example illustrated in FIG. 3, the number of products of the reference solution is "23".

$$\text{Agreement rate} = (\text{sum of the number of products of the}$$
$$\text{corresponding solution belonging to the product type same as that of the}$$
$$\text{reference solution/the number of products of the reference solution}) \times 100 \ ...$$
$$(1)$$

With regard to the annealing solution 1-1 for seed 0, the sum of the number of products of the solution 1-1 belonging to the product type same as that of the reference solution is "10", and thus the agreement rate is to be "43". With regard to the solution 1-2, the sum of the number of products of the solution 1-2 belonging to the product type same as that of the reference solution is "8", and thus the agreement rate is to be "26". With regard to the solution 1-3, the sum of the number of products of the solution 1-3 belonging to the product type same as that of the reference solution is "13", and thus the agreement rate is to be "57".

With regard to the annealing solution 6-1 for seed 6, the sum of the number of products of the solution 6-1 belonging to the product type same as that of the reference solution is "13", and thus the agreement rate is to be "57".

For example, since the variation in the agreement rate of the solutions 1-1 to 1-3 (the difference between the maximum value and the minimum value is 31) is larger than the variation in the agreement rate of the solution 6-1 (the difference between the maximum value and the minimum value is 0), the reference device selects seed 6 that leads to the solution 6-1 as a parameter to be set in the annealing machine. Thereafter, seed 6 is used for a similar optimization problem, whereby it becomes possible to obtain an annealing solution having a bit state close to the bit state of the reference solution obtained by solving the optimization problem with a dedicated solver.

However, according to the reference technique described above, the optimum seed 6 may not be selected from the plurality of seeds 0 to 9 unless the processes described with reference to FIGs. 1 to 3 are sequentially executed, thereby taking a longer work time. For example, according to the reference technique, it is not possible to easily estimate a setting parameter effective for obtaining, with the annealing machine, the annealing solution including a bit state similar to the bit state of the reference solution based on the dedicated solver.

Next, an information processing apparatus according to the present embodiment will be described. The information processing apparatus sequentially executes a primary screening and a secondary screening.

First, the primary screening executed by the information processing apparatus will be described. The information processing apparatus calculates a reference solution by solving an optimization problem using a dedicated solver. Furthermore, the information processing apparatus prepares a plurality of seeds 0 to 9.

The information processing apparatus sets each seed value in the annealing machine, and calculates a solution in such a manner that the energy value approaches the optimum value within a predetermined calculation time. For example, the calculation time for calculating a solution in the primary screening will be referred to as a first calculation time. The first calculation time is a relatively short calculation time, which is set by an administrator in advance.

For example, the information processing apparatus sets seed 0 as an initial value in the annealing machine and calculates a solution in such a manner that the energy value approaches the optimum value within the first calculation time.

For the other seeds 1 to 9 as well, the information processing apparatus similarly calculates solutions in such a manner that the energy value approaches the optimum value. In the following descriptions, an annealing solution obtained by setting a certain seed as an initial value in the annealing machine and calculating a solution such that the energy value approaches the optimum value will be referred to as an "annealing solution based on a certain seed".

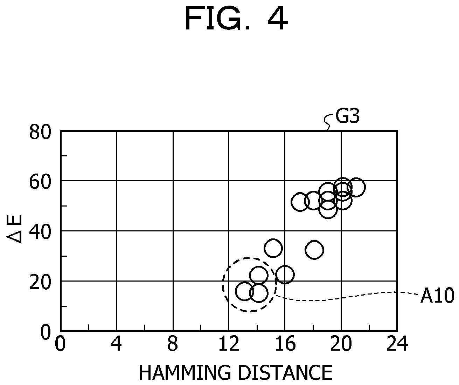

The information processing apparatus calculates a difference ($\Delta E$) between the annealing value of the annealing solution based on a certain seed and the reference value of the reference solution. Furthermore, the information processing apparatus calculates a Hamming distance from the bit state of the annealing solution based on a certain seed and the bit state of the reference solution. The information processing apparatus plots the relationship between the difference and the Hamming distance for each seed on the graph G3 of FIG. 4.

FIG. 4 is a chart for explaining the primary screening. In the graph G3 illustrated in FIG. 4, the horizontal axis is an axis corresponding to the Hamming distance, and the vertical axis is an axis corresponding to $\Delta E$. Each of the plotted points (circle) illustrated in FIG. 4 is associated with identification information of a seed (one of seeds 0 to 9) that is the initial value at the time of obtaining the annealing solution.

The information processing apparatus refers to the graph G3, selects a point at which $\Delta E$ is less than the threshold value, and specifies the type of the seed associated with the selected point. For example, the information processing apparatus selects a point group included in the area A10 in FIG. 4. The seeds corresponding to the point group in the area A10 are seed 0 and seed 6. For example, in the example illustrated in FIG. 4, the information processing apparatus selects seed 0 and seed 6 as effective parameter candidates on the basis of the primary screening.

Next, the secondary screening executed by the information processing apparatus will be described. The information processing apparatus increases the calculation time and obtains the annealing solution again while focusing on the parameter candidates (seed 0 and seed 6) selected in the primary screening. For example, with the calculation time for obtaining the annealing solution in the secondary screening regarded as a second calculation time, the second calculation time is longer than the first calculation time. A degree of increase of the second calculation time relative to the first calculation time is to be set in advance by the administrator.

A case where the information processing apparatus executes the secondary screening using seed 0 and seed 6 will be described. The information processing apparatus sets seed 0 as an initial value in the annealing machine and calculates a solution in such a manner that the energy value approaches the optimum value within the second calculation time.

The information processing apparatus calculates the difference $\Delta E$ between the annealing value and the reference value, and also calculates the Hamming distance between the annealing solution and the reference solution. In a case where a plurality of annealing solutions is obtained for seed 0, the information processing apparatus calculates $\Delta E$ and the Hamming distance for each annealing solution.

The information processing apparatus sets seed 6 as an initial value in the annealing machine and calculates a solution in such a manner that the energy value approaches the optimum value within the second calculation time. The information processing apparatus calculates the difference $\Delta E$ between the annealing value and the reference value, and also calculates the Hamming distance between the annealing solution and the reference solution. In a case where a plurality of annealing solutions is obtained for seed 6, the information processing apparatus calculates $\Delta E$ and the Hamming distance for each annealing solution.

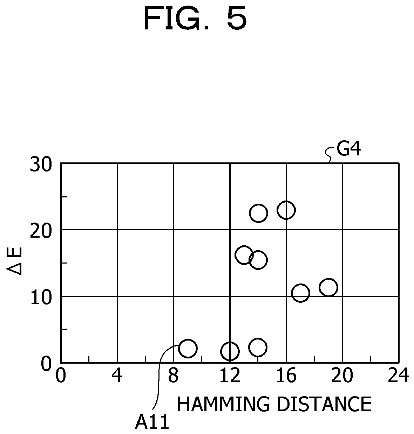

The information processing apparatus plots, on the graph G4 of FIG. 5, the relationship between $\Delta E$ and the Hamming distance with respect to seed 0 and seed 6.

FIG. 5 is a chart for explaining the secondary screening. In the graph G4 illustrated in FIG. 5, the horizontal axis is an axis corresponding to the Hamming distance, and the vertical axis is an axis corresponding to ΔE. Each of the plotted points (circle) illustrated in FIG. 5 is associated with identification information of a seed (e.g., seed 0 or seed 6) that is the initial value at the time of obtaining the annealing solution.

The information processing apparatus refers to the graph G4, selects a point A11 at which the Hamming distance is minimized, and specifies the identification information of the seed associated with the selected point A11. The seed specified by the information processing apparatus is to be an effective setting parameter for obtaining, using the annealing machine, a solution including a combination of elements similar to a dedicated solver.

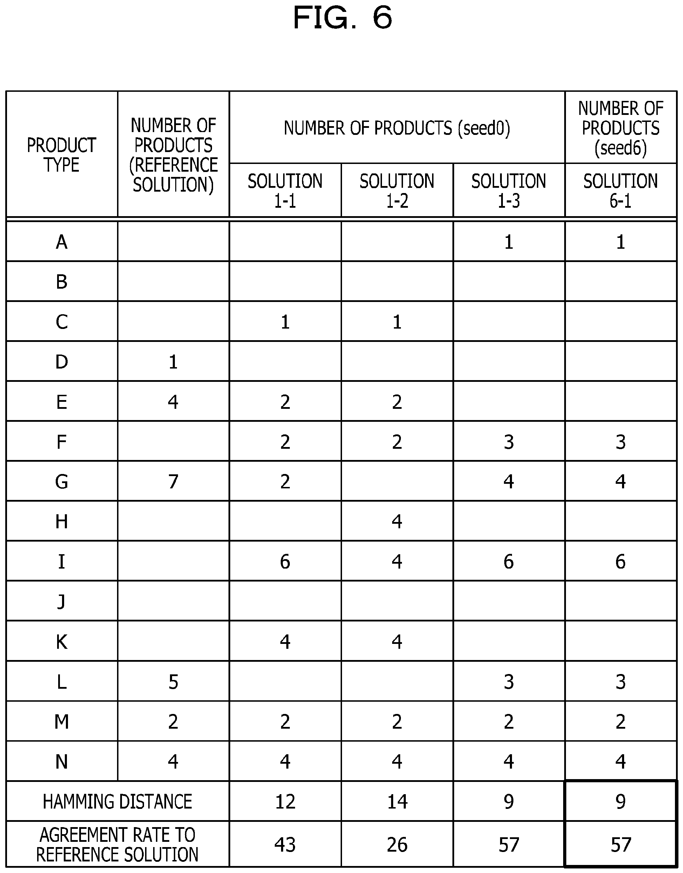

FIG. 6 is a table for explaining validity of seeds specified by the information processing apparatus. In addition to the result described with reference to FIG. 3, FIG. 6 illustrates the Hamming distance between the reference solution and each annealing solution (solutions 1-1 to 1-3 and solution 6-1). Note that, although FIG. 6 indicates the agreement rate with the reference solution for comparison with the reference technique, the information processing apparatus according to the present embodiment does not calculate the agreement rate.

In FIG. 6, for example, the Hamming distance between the reference solution and the solution 1-1 is "12". The Hamming distance between the reference solution and the solution 1-2 is "14". The Hamming distance between the reference solution and the solution 1-3 is "9". The Hamming distance between the reference solution and the solution 6-1 is "9". The information processing apparatus specifies seed 6 in which the variation in the Hamming distance (difference between the maximum value and the minimum value) is smaller. Here, the agreement rate of the solution 6-1 is the maximum agreement rate. For example, seed 6 specified on the basis of the primary screening and the secondary screening may be said to be an effective setting parameter for obtaining, using the annealing machine, a solution including a combination of elements similar to a dedicated solver.

As described above, the information processing apparatus according to the present embodiment specifies a seed in which the Hamming distance between the reference solution and the annealing solution is smaller and the difference between the reference value and the annealing value is smaller. With the specified seed used as an initial value, even when each process described in the reference technique is not executed, the bit state of the annealing solution in the case of solving the optimization problem using the annealing machine may be made close to the bit state of the reference solution in the case of solving the optimization problem using the dedicated solver.

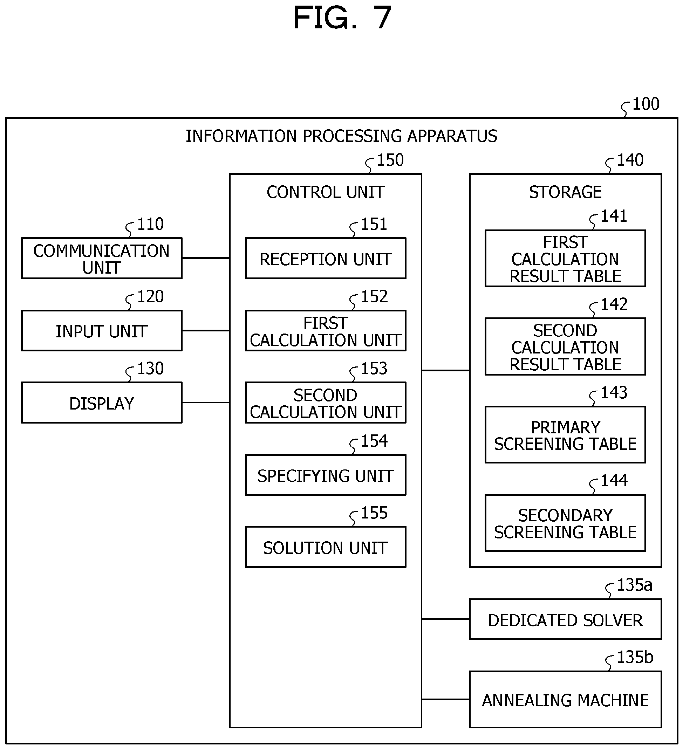

Next, a configuration of the information processing apparatus according to the present embodiment will be described. FIG. 7 is a functional block diagram illustrating the configuration of the information processing apparatus according to the present embodiment. As illustrated in FIG. 7, an information processing apparatus 100 includes a communication unit 110, an input unit 120, a display 130, a dedicated solver 135a, an annealing machine 135b, a storage 140, and a control unit 150.

The communication unit 110 is a processing unit that executes data communication with an external device via a network. Illustration of the external device is omitted. The communication unit 110 corresponds to a communication device. The control unit 150 exchanges data with the external device via the communication unit 110.

The input unit 120 is an input device for inputting various data to the control unit 150 of the information processing apparatus 100. The input unit 120 corresponds to a keyboard, a mouse, a touch panel, and the like.

The display 130 is a display device that displays information output from the control unit 150. The display 130 corresponds to an organic electro luminescence (EL) display, a liquid crystal display, a touch panel, and the like.

The dedicated solver 135a, which corresponds to OR-Tools, CPLEX, Gurobi, and the like, is an arithmetic unit that solves a combinatorial optimization problem, and is implemented by a central processing unit (CPU) and the like. Upon reception of an objective function related to the optimization problem and initial values of parameters to be set in the objective function, the dedicated solver 135a obtains a reference solution in such a manner that the value of the objective function (energy value) approaches the optimum value.

The annealing machine 135b is an optimization device capable of processing combinatorial optimization problems at high speed. The annealing machine 135b is also called an Ising machine. Upon reception of the objective function related to the optimization problem and parameters (initial values) to be set in the objective function, the annealing machine 135b obtains, on the basis of an Ising model, an annealing solution in such a manner that the value of the objective function approaches the optimum value.

The storage 140 includes a first calculation result table 141, and a second calculation result table 142. The storage 140 corresponds to a semiconductor memory element such as a random access memory (RAM) and a flash memory, or a storage device such as a hard disk drive (HDD).

The first calculation result table 141 is a table that retains information associated with the reference value and the reference solution obtained by the dedicated solver 135a in relation to the combinatorial optimization problem. The first calculation result table 141 may retain information associated with the initial value to be set in the dedicated solver 135a.

The second calculation result table 142 is a table that retains, in association with information for identifying parameters such as seeds, the annealing value and the annealing solution obtained by the annealing machine 135b in relation to the combinatorial optimization problem.

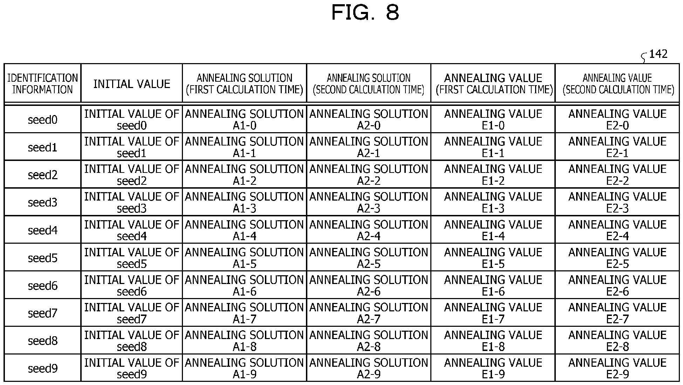

FIG. 8 is a diagram illustrating an exemplary data structure of the second calculation result table. As illustrated in FIG. 8, the second calculation result table 142 associates identification information with initial values, annealing solutions, and annealing values. For example, the annealing solution includes an annealing solution obtained in the first calculation time and an annealing solution obtained in the second calculation time. The annealing value includes an annealing value of the annealing solution obtained in the first calculation time and an annealing value of the annealing solution obtained in the second calculation time.

The identification information is information for identifying a parameter such as a seed. The initial value is an initial value (initial parameter) of a parameter such as a seed. The annealing solution is a solution obtained by setting the initial value in the annealing machine 135b and calculating a solution. Although illustration is omitted in FIG. 8, the second calculation result table may include annealing solutions and annealing values related to a calculation time other than the first calculation time and the second calculation time.

For example, in the first row of FIG. 8, the initial value of seed 0 is given to the annealing machine 135b to calculate a solution within the first calculation time, thereby obtaining an annealing solution A1-0. The energy of the annealing solution A1-0 is to be an annealing value E1-0. The initial value of seed 0 is given to the annealing machine 135b to calculate a solution within the second calculation time, thereby obtaining an annealing solution A2-0. The energy of the annealing solution A2-0 is to be an annealing value E2-0.

Note that, even in the case of the same identification information (in the case of giving one initial value), a plurality of annealing solutions may be obtained within the first calculation time or the second calculation time, but illustration is omitted. In a case where a plurality of annealing solutions is obtained, the annealing value of each annealing solution is also registered in the second calculation result.

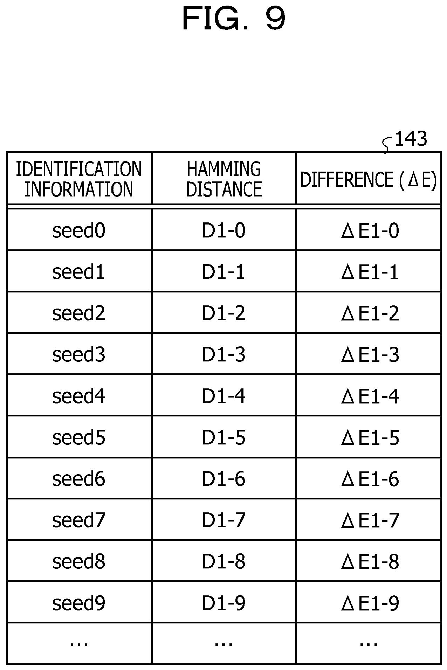

FIG. 9 is a diagram illustrating an exemplary data structure of the primary screening table. A primary screening table 143 is a table that retains information associated with the graph G3 described with reference to FIG. 4. As illustrated in FIG. 9, the primary screening table 143 associates identification information with Hamming distances and differences. The identification information is information for identifying a parameter such as a seed. The Hamming distance indicates a Hamming distance between the annealing solution and the reference solution based on a certain seed. The difference indicates a difference between the annealing value and the reference value based on a certain seed.

In a case where a plurality of annealing solutions is obtained from the same initial value within the first calculation time, a plurality of sets of the Hamming distance and the difference corresponding to the same identification information is registered in the primary screening table 143.

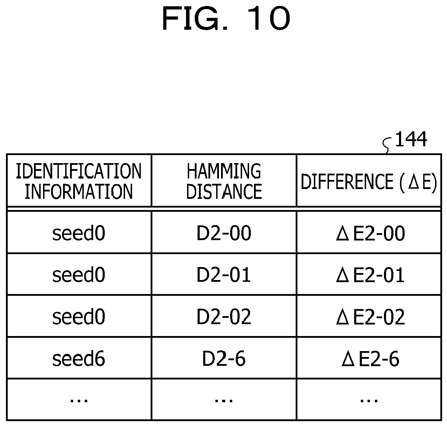

FIG. 10 is a diagram illustrating an exemplary data structure of the secondary screening table. A secondary screening table 144 is a table that retains information associated with the graph G4 illustrated in FIG. 5. As illustrated in FIG. 10, the secondary screening table 144 associates identification information with Hamming distances and differences. The identification information is information for identifying a parameter such as a seed. The Hamming distance indicates a Hamming distance between the annealing solution and the reference solution based on a certain seed (seed selected in the primary screening). The difference indicates a difference between the annealing value and the reference value based on a certain seed (seed selected in the primary screening).

In a case where a plurality of annealing solutions is obtained from the same initial value within the second calculation time, a plurality of sets of the Hamming distance and the difference corresponding to the same identification information is registered in the secondary screening table 144.

The description returns to FIG. 7. The control unit 150 includes a reception unit 151, a first calculation unit 152, a second calculation unit 153, a specifying unit 154, and a solution unit 155. The control unit 150 may be implemented by a central processing unit (CPU), a micro processing unit (MPU), or the like. Furthermore, the control unit 150 may also be implemented by hard wired logic such as an application specific integrated circuit (ASIC) and a field programmable gate array (FPGA).

The reception unit 151 is a processing unit that receives information associated with an initial value to be set in the dedicated solver 135a and information associated with an initial value of a parameter, such as each seed, to be set in the annealing machine 135b. The reception unit 151 may receive the information associated with each initial value from the input unit 120, or from an external device via a network.

The reception unit 151 registers the information associated with the initial value to be set in the dedicated solver 135a in the first calculation result table 141. The reception unit 151 registers the information associated with the initial value of the parameter such as each seed in the second calculation result table 142.

The reception unit 151 may receive information associated with the objective function of the combinatorial optimization problem. The reception unit 151 outputs the information associated with the objective function to the first calculation unit 152 and the second calculation unit 153.

The first calculation unit 152 is a processing unit that calculates a reference solution and a reference value using the dedicated solver 135a. For example, the first calculation unit 152 inputs the information associated with the objective function and the initial value registered in the first calculation result table to the dedicated solver 135a, and obtains, from the dedicated solver 135a, a reference solution in which the value of the objective function becomes the optimum value and a reference value corresponding to the reference solution. The first calculation unit 152 registers the information associated with the reference solution and the reference value in the first calculation result table 141.

The second calculation unit 153 is a processing unit that calculates, using the annealing machine 135b, an annealing value and an annealing solution according to a parameter such as each seed. A process at the time of the primary screening executed by the second calculation unit 153 and a process at the time of the secondary screening executed by the second calculation unit 153 will be described in order.

The process at the time of the primary screening executed by the second calculation unit 153 will be described. The second calculation unit 153 inputs, to the annealing machine 135b, information associated with the objective function and initial values of parameters such as seeds registered in the second calculation result table 142. The second calculation unit 153 obtains, from the annealing machine 135b, the annealing value and the annealing solution in which the value of the objective function becomes the optimum value within the first calculation time. The second calculation unit 153 registers, in the second calculation result table 142, the annealing solution and the annealing value within the first calculation time in association with identification information of the parameters such as seeds.

The second calculation unit 153 repeatedly executes the process described above for seeds 0 to 9, calculates the annealing solution and the annealing value according to seeds 0 to 9, and registers them in the second calculation result table 142.

The process at the time of the secondary screening executed by the second calculation unit 153 will be described. The second calculation unit 153 obtains identification information of a parameter such as a seed selected by the specifying unit 154 to be described later. The second calculation unit 153 inputs, to the annealing machine 135b, the information associated with the objective function and the initial value of the seed selected by the specifying unit 154, which is the seed registered in the second calculation result table 142.

The second calculation unit 153 obtains, from the annealing machine 135b, the annealing value and the annealing solution in which the value of the objective function becomes the optimum value within the second calculation time. The second calculation unit 153 registers, in the second calculation result table 142, the annealing solution and the annealing value within the second calculation time in association with the identification information of the parameters such as seeds.

The specifying unit 154 is a processing unit that specifies a parameter such as a seed to be used in the case of solving the optimization problem using the annealing machine instead of solving the optimization problem using a dedicated solver. A process at the time of the primary screening executed by the specifying unit 154 and a process at the time of the secondary screening executed by the specifying unit 154 will be described in order.

The process at the time of the primary screening executed by the specifying unit 154 will be described. The specifying unit 154 obtains the reference solution and the reference value registered in the first calculation result table 141. The specifying unit 154 obtains the annealing solution and the annealing value of the first calculation time registered in the second calculation result table 142. The specifying unit 154 compares the bit state of the reference solution with the bit state of the annealing solution to calculate a Hamming distance. The specifying unit 154 calculates a difference between the reference value and the annealing value. The specifying unit 154 registers, in the primary screening table 143, the calculated Hamming distance and the difference in association with the identification information.

The specifying unit 154 repeatedly executes the process of calculating the Hamming distance and the difference for each identification information registered in the second calculation result table 142, and registers the calculation result in the primary screening table 143.

The specifying unit 154 refers to the primary screening table 143, and specifies the identification information in which $\Delta E$ is less than the threshold value. For example, the specifying unit 154 selects the identification information corresponding to the point group included in the area A10 described with reference to FIG. 4. As an example, the identification information corresponding to the point group in the area A10 is regarded as seed 0 and seed 6. The specifying unit 154 selects the identification information seed 0 and seed 6 as effective parameter candidates according to the primary screening. The specifying unit 154 starts the secondary screening by outputting the identification information selected in the primary screening to the second calculation unit 153.

Note that, although the threshold value for $\Delta E$ is set in the primary screening, a threshold value may also be set for the Hamming distance, and the specifying unit 154 may select identification information in which $\Delta E$ is less than the threshold value and also the Hamming distance is less than the threshold value.

The process at the time of the secondary screening executed by the specifying unit 154 will be described. The specifying unit 154 obtains the reference solution and the reference value registered in the first calculation result table 141. The specifying unit 154 obtains the annealing solution and the annealing value of the second calculation time registered in the second calculation result table 142. The specifying unit 154 compares the bit state of the reference solution with the bit state of the annealing solution to calculate a Hamming distance. The specifying unit 154 calculates a difference between the reference value and the annealing value. The specifying unit 154 registers, in the secondary screening table 144, the calculated Hamming distance and the difference in association with the identification information.

The specifying unit 154 refers to the secondary screening table 144, and specifies the identification information that minimizes the Hamming distance. For example, the specifying unit 154 specifies the identification information corresponding to the point A11 described with reference to FIG. 5. The specifying unit 154 outputs the specified identification information to the solution unit 155. The specifying unit 154 may store the initial value of the seed corresponding to the specified identification information in the storage 140.

Meanwhile, although the case where the second calculation unit 153 and the specifying unit 154 executes the secondary screening after executing the primary screening has been described in the description above, it is not limited thereto. For example, in a case where the identification information that sufficiently satisfies the extraction level is specified at the time of the primary screening, the secondary screening may not be executed. For example, the extraction level is satisfied in a case where the Hamming distance is small enough and $\Delta E$ is small enough. The extraction level is specified in advance.

Here, a relationship between the bit state of the reference solution (or annealing solution) and the reference value (or annealing value) will be described. The reference solution has a bit (0 or 1) for each product type, and the number of products is determined at the position where "1" stands. For example, in a case where the bit state corresponding to a product type "A" is "1010", it means that the number of the products A is "10". The reference solution also has a bit state for each of product types B to N in a similar manner.

Meanwhile, the reference value (energy) is calculated on the basis of, for example, the formula (2). In the formula (2), a value related to the objective function is set in $\sigma_j$. For the bit state of the reference solution, $x_i$ is $x_i = 1$ in a case where the bit of the i-th bit is "1", and $x_i = 0$ in a case where the bit of the i-th bit is "0". In a case where the bit string of the reference solution is "1010", it indicates $x_1 = 0$, $x_2 = 1$, $x_3 = 0$, and $x_4 = 1$. For example, the energy is the same if the number of "1" in the bit state is the same.

$$E = \Sigma\sigma_j \times x_i \; ... \; (2)$$

The solution unit 155 is a processing unit that solves, using the annealing machine 135b, an optimization problem similar to the optimization problem having been subject to the primary screening and the secondary screening (hereinafter referred to as a similar optimization problem). The solution unit 155 obtains, from the second calculation result table 142, the initial value of the parameter such as the seed corresponding to the identification information specified by the specifying unit 154, and uses the similar optimization problem as an initial value in calculating a solution. In a case where an additional parameter setting is received from the input unit 120 or the like, the additional parameter may be further used.

For example, the solution unit 155 inputs the objective function of the similar optimization problem and the initial value to the annealing machine, thereby obtaining a solution of the similar optimization problem. The solution unit 155 outputs the solution to the display 130 in a case where the obtained solution satisfies a predetermined condition. The solution unit 155 resets the parameter and repeatedly executes the process described above until the obtained solution satisfies the predetermined condition.

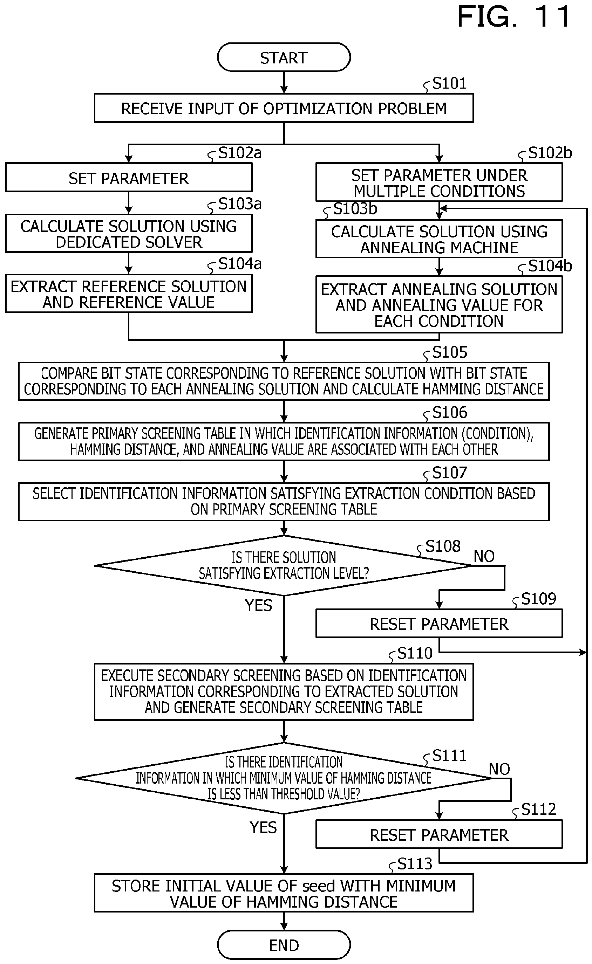

Next, an exemplary a processing procedure of the information processing apparatus according to the present embodiment will be described. FIG. 11 is a flowchart (1) illustrating the processing procedure of the information processing apparatus according to the present embodiment. As illustrated in FIG. 11, the reception unit 151 of the information processing apparatus 100 receives an input of the optimization problem (step S101).

The first calculation unit 152 of the information processing apparatus 100 sets a parameter (step S102a). The first calculation unit 152 calculates a solution using the dedicated solver 135a (step S103a). The first calculation unit 152 extracts a reference solution and a reference value from the dedicated solver 135a (step S104a).

Meanwhile, the second calculation unit 153 of the information processing apparatus 100 sets parameters (e.g., initial value of each seed) under multiple conditions (step S102b). The second calculation unit 153 calculates a solution using the annealing machine 135b (step S103b). The second calculation unit 153 extracts an annealing solution and an annealing value for each condition (step S104b).

The specifying unit 154 of the information processing apparatus 100 compares the bit state corresponding to the reference solution with the bit state corresponding to each annealing solution, and calculates a Hamming distance (step S105). The specifying unit 154 generates the primary screening table 143 in which the identification information, the Hamming distance, and the annealing value are associated with each other (step S106).

The specifying unit 154 selects identification information that satisfies the extraction condition on the basis of the primary screening table 143 (step S107). In a case where there is no solution that satisfies the extraction level (No in step S108), the specifying unit 154 resets the parameter (step S109), and proceeds to step S103b.

On the other hand, in a case where there is a solution that satisfies the extraction level (Yes in step S108), the specifying unit 154 proceeds to step S110. The second calculation unit 153 executes the secondary screening on the basis of the identification information corresponding to the extracted solution, and generates the secondary screening table 144 (step S110).

The specifying unit 154 refers to the secondary screening table 144, and determines whether there is identification information in which the minimum value of the Hamming distance is less than a threshold value (step S111). In a case where there is no identification information in which the minimum value of the Hamming distance is less than the threshold value (No in step S111), the information processing apparatus 100 resets the parameter (step S112), and proceeds to step S103b.

On the other hand, in a case where there is identification information in which the minimum value of the Hamming distance is less than the threshold value (Yes in step S111), the specifying unit 154 stores the initial value of the seed having the minimum value of the Hamming distance in the storage 140 (step S113).

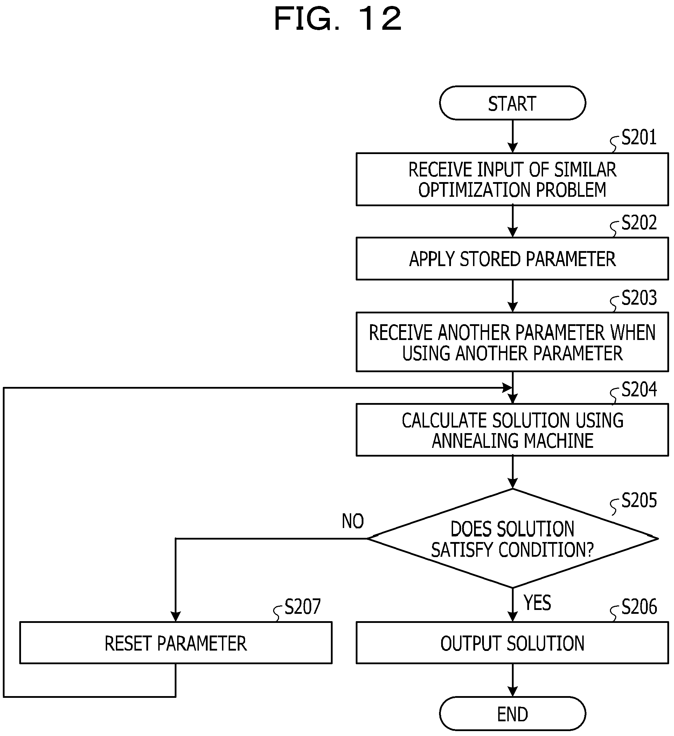

FIG. 12 is a flowchart (2) illustrating the processing procedure of the information processing apparatus according to the present embodiment. The solution unit 155 of the information processing apparatus 100 receives an input of a similar optimization problem (step S201). The solution unit 155 applies the parameters stored in the storage 140 (step S202).

In the case of using other parameters, the solution unit 155 receives other parameters (step S203). The solution unit 155 calculates a solution using the annealing machine 135b (step S204).

In a case where the solution satisfies the condition (Yes in step S205), the solution unit 155 outputs the solution to the display 130 (step S206). On the other hand, in a case where the solution does not satisfy the condition (No in step S205), the solution unit 155 resets the parameter (step S207), and proceeds to step S204.

Next, effects of the information processing apparatus 100 according to the present embodiment will be described. The information processing apparatus 100 according to the present embodiment specifies an initial value (parameter such as seed) of the annealing solution in which the Hamming distance between the reference solution and the annealing solution is smaller and the difference between the reference value and the annealing value is smaller. With the specified seed used as an initial value, even when each process described in the reference technique is not executed, the bit state of the annealing solution in the case of solving the optimization problem using the annealing machine may be made close to the bit state of the reference solution in the case of solving the optimization problem using the dedicated solver.

The information processing apparatus 100 executes the primary screening to calculate the Hamming distance for each identification information, selects the identification information in which the Hamming distance is less than the threshold value, and executes the secondary screening. As a result, it becomes possible to carefully select effective parameter candidates from multiple pieces of identification information and execute the secondary screening.

The information processing apparatus 100 repeatedly executes the process of updating the annealing solution until the annealing value approaches the reference value. This makes it possible to specify the effective setting parameter for obtaining, using the annealing machine, a solution including a combination of elements similar to a dedicated solver.

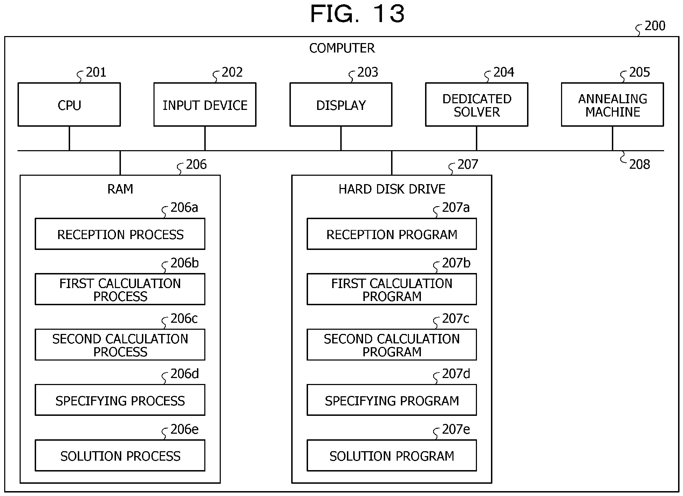

Next, an exemplary hardware configuration of a computer that implements functions similar to those of the information processing apparatus 100 described in the embodiment above will be described. FIG. 13 is a diagram illustrating an exemplary hardware configuration of a computer that implements functions similar to those of the information processing apparatus according to the present embodiment.

As illustrated in FIG. 13, a computer 200 includes a CPU 201 that executes various types of arithmetic processing, an input device 202 that receives data input from a user, and a display 203. Furthermore, the computer 200 includes a dedicated solver 204, and an annealing machine 205. Furthermore, the computer 200 includes a RAM 206 that temporarily stores various kinds of information, and a hard disk drive 207. Then, each of the devices 201 to 207 is connected to a bus 208.

The hard disk drive 207 includes a reception program 207a, a first calculation program 207b, a second calculation program 207c, a specifying program 207d, and a solution program 207e. Furthermore, the CPU 201 reads each of the programs 207a to 207e, and loads it to the RAM 206.

The reception program 207a functions as a reception process 206a. The first calculation program 207b functions as a first calculation process 206b. The second calculation program 207c functions as a second calculation process 206c. The specifying program 207d functions as a specifying process 206d. The solution program 207e functions as a solution process 206e.

Processing of the reception process 206a corresponds to the processing of the reception unit 151. Processing of the first calculation process 206b corresponds to the processing of the first calculation unit 152. Processing of the second calculation process 206c corresponds to the processing of the second calculation unit 153. Processing of the specifying process 206d corresponds to the processing of the specifying unit 154. Processing of the solution process 206e corresponds to the processing of the solution unit 155.

Note that each of the programs 207a to 207f may not necessarily be stored in the hard disk drive 207 in advance. For example, each of the programs may be stored in a "portable physical medium" to be inserted in the computer 200, such as a flexible disk (FD), a compact disc read only memory (CD-ROM), a digital versatile disc (DVD), a magneto-optical disk, and an IC card. Then, the computer 200 may read and execute each of the programs 207a to 207e.

[REFERENCE SIGNS LIST]

100information processing apparatus
110communication unit
120input unit
130display
135adedicated solver
135bannealing machine
140storage
141first calculation result table
142second calculation result table
150control unit
151reception unit
152first calculation unit
153second calculation unit
154specifying unit
155solution unit

[CITATION LIST]

[PATENT LITERATURE]

Japanese Laid-open Patent Publication No. 2019-96334;
Japanese Laid-open Patent Publication No.2015-191340;
Japanese Laid-open Patent Publication No.2006-40220.

**Claims**

1. An information processing apparatus comprising:

   a first calculation unit configured to calculate a reference solution and a reference value by solving an optimization problem using a dedicated solver on the basis of a first parameter, the reference solution being specified by a plurality of bits included in an objective function of the optimization problem, the reference value being an energy value of the objective function corresponding to the reference solution;
   a second calculation unit configured to calculate an annealing solution and an annealing value by solving the optimization problem using an annealing machine on the basis of a plurality of second parameters, the annealing solution being specified by the plurality of bits, the annealing value being an energy value of the objective function corresponding to the annealing solution; and
   a specifying unit configured to specify, among the plurality of second parameters, a parameter to be used in a case of solving the optimization problem using the annealing machine, the specifying of the parameter being performed by using a Hamming distance between a first bit state of the plurality of bits in the reference solution and a second bit state of the plurality of bits in the annealing solution and a difference between the annealing value and the reference value.

2. The information processing apparatus according to claim 1, wherein
   the second calculation unit calculates a plurality of the annealing values,
   the specifying unit selects the second parameter corresponding to the annealing value in which the difference from the reference value is less than a threshold value, and
   the second calculation unit resets the second parameter selected by the specifying unit in the annealing machine, and calculates the plurality of second parameters in the case of solving the optimization problem with a calculation time longer than a previous calculation time.

3. The information processing apparatus according to claim 2, wherein

the specifying unit specifies, as a parameter to be used in the case of solving the optimization problem using the annealing machine, the second parameter corresponding to the annealing solution in which the Hamming distance from the reference solution is less than a threshold value.

4.  A specifying method implemented by a computer, the method comprising:

calculating a reference solution and a reference value by solving an optimization problem using a dedicated solver on the basis of a first parameter, the reference solution being specified by a plurality of bits included in an objective function of the optimization problem, the reference value being an energy value of the objective function corresponding to the reference solution;
calculating an annealing solution and an annealing value by solving the optimization problem using an annealing machine on the basis of a plurality of second parameters, the annealing solution being specified by the plurality of bits, the annealing value being an energy value of the objective function corresponding to the annealing solution; and
specifying, among the plurality of second parameters, a parameter to be used in a case of solving the optimization problem using the annealing machine, the specifying of the parameter being performed by using a Hamming distance between a first bit state of the plurality of bits in the reference solution and a second bit state of the plurality of bits in the annealing solution and a difference between the annealing value and the reference value.

5.  The specifying method according to claim 4, further comprising:

calculating a plurality of the annealing values;
selecting the second parameter corresponding to the annealing value in which the difference from the reference value is less than a threshold value;
resetting the selected second parameter in the annealing machine; and
calculating the plurality of second parameters in the case of solving the optimization problem with a calculation time longer than a previous calculation time.

6.  The specifying method according to claim 5, further comprising:
specifying, as a parameter to be used in the case of solving the optimization problem using the annealing machine, the second parameter corresponding to the annealing solution in which the Hamming distance from the reference solution is less than a threshold value.

7.  A computer program comprising instructions which, when the program is executed by a computer, cause the computer to carry out processing, the processing comprising:

calculating a reference solution and a reference value by solving an optimization problem using a dedicated solver on the basis of a first parameter, the reference solution being specified by a plurality of bits included in an objective function of the optimization problem, the reference value being an energy value of the objective function corresponding to the reference solution;
calculating an annealing solution and an annealing value by solving the optimization problem using an annealing machine on the basis of a plurality of second parameters, the annealing solution being specified by the plurality of bits, the annealing value being an energy value of the objective function corresponding to the annealing solution; and
specifying, among the plurality of second parameters, a parameter to be used in a case of solving the optimization problem using the annealing machine, the specifying of the parameter being performed by using a Hamming distance between a first bit state of the plurality of bits in the reference solution and a second bit state of the plurality of bits in the annealing solution and a difference between the annealing value and the reference value.

8.  The computer program according to claim 7, the processing further comprising:

calculating a plurality of the annealing values;
selecting the second parameter corresponding to the annealing value in which the difference from the reference value is less than a threshold value;
resetting the selected second parameter in the annealing machine; and
calculating the plurality of second parameters in the case of solving the optimization problem with a calculation time longer than a previous calculation time.

**9.** The computer program according to claim 8, the processing further comprising:
specifying, as a parameter to be used in the case of solving the optimization problem using the annealing machine, the second parameter corresponding to the annealing solution in which the Hamming distance from the reference solution is less than a threshold value.

# FIG. 1

# FIG. 2

# FIG. 3

| PRODUCT TYPE | NUMBER OF PRODUCTS (REFERENCE SOLUTION) | NUMBER OF PRODUCTS (seed0) | | | NUMBER OF PRODUCTS (seed6) |
|---|---|---|---|---|---|
| | | SOLUTION 1-1 | SOLUTION 1-2 | SOLUTION 1-3 | SOLUTION 6-1 |
| A | | | | 1 | 1 |
| B | | | | | |
| C | | 1 | 1 | | |
| D | 1 | | | | |
| E | 4 | 2 | 2 | | |
| F | | 2 | 2 | 3 | 3 |
| G | 7 | 2 | | 4 | 4 |
| H | | | 4 | | |
| I | | 6 | 4 | 6 | 6 |
| J | | | | | |
| K | | 4 | 4 | | |
| L | 5 | | | 3 | 3 |
| M | 2 | 2 | 2 | 2 | 2 |
| N | 4 | 4 | 4 | 4 | 4 |
| AGREEMENT RATE TO REFERENCE SOLUTION | | 43 | 26 | 57 | 57 |

# FIG. 4

# FIG. 5

# FIG. 6

| PRODUCT TYPE | NUMBER OF PRODUCTS (REFERENCE SOLUTION) | NUMBER OF PRODUCTS (seed0) | | | NUMBER OF PRODUCTS (seed6) |
|---|---|---|---|---|---|
| | | SOLUTION 1-1 | SOLUTION 1-2 | SOLUTION 1-3 | SOLUTION 6-1 |
| A | | | | 1 | 1 |
| B | | | | | |
| C | | 1 | 1 | | |
| D | 1 | | | | |
| E | 4 | 2 | 2 | | |
| F | | 2 | 2 | 3 | 3 |
| G | 7 | 2 | | 4 | 4 |
| H | | | 4 | | |
| I | | 6 | 4 | 6 | 6 |
| J | | | | | |
| K | | 4 | 4 | | |
| L | 5 | | | 3 | 3 |
| M | 2 | 2 | 2 | 2 | 2 |
| N | 4 | 4 | 4 | 4 | 4 |
| HAMMING DISTANCE | | 12 | 14 | 9 | 9 |
| AGREEMENT RATE TO REFERENCE SOLUTION | | 43 | 26 | 57 | 57 |

# FIG. 7

INFORMATION PROCESSING APPARATUS ⌐100

CONTROL UNIT ⌐150

STORAGE ⌐140

COMMUNICATION UNIT ⌐110

INPUT UNIT ⌐120

DISPLAY ⌐130

RECEPTION UNIT ⌐151

FIRST CALCULATION UNIT ⌐152

SECOND CALCULATION UNIT ⌐153

SPECIFYING UNIT ⌐154

SOLUTION UNIT ⌐155

FIRST CALCULATION RESULT TABLE ⌐141

SECOND CALCULATION RESULT TABLE ⌐142

PRIMARY SCREENING TABLE ⌐143

SECONDARY SCREENING TABLE ⌐144

DEDICATED SOLVER ⌐135a

ANNEALING MACHINE ⌐135b

## FIG. 8

142

| IDENTIFICATION INFORMATION | INITIAL VALUE | ANNEALING SOLUTION (FIRST CALCULATION TIME) | ANNEALING SOLUTION (SECOND CALCULATION TIME) | ANNEALING VALUE (FIRST CALCULATION TIME) | ANNEALING VALUE (SECOND CALCULATION TIME) |
|---|---|---|---|---|---|
| seed0 | INITIAL VALUE OF seed0 | ANNEALING SOLUTION A1-0 | ANNEALING SOLUTION A2-0 | ANNEALING VALUE E1-0 | ANNEALING VALUE E2-0 |
| seed1 | INITIAL VALUE OF seed1 | ANNEALING SOLUTION A1-1 | ANNEALING SOLUTION A2-1 | ANNEALING VALUE E1-1 | ANNEALING VALUE E2-1 |
| seed2 | INITIAL VALUE OF seed2 | ANNEALING SOLUTION A1-2 | ANNEALING SOLUTION A2-2 | ANNEALING VALUE E1-2 | ANNEALING VALUE E2-2 |
| seed3 | INITIAL VALUE OF seed3 | ANNEALING SOLUTION A1-3 | ANNEALING SOLUTION A2-3 | ANNEALING VALUE E1-3 | ANNEALING VALUE E2-3 |
| seed4 | INITIAL VALUE OF seed4 | ANNEALING SOLUTION A1-4 | ANNEALING SOLUTION A2-4 | ANNEALING VALUE E1-4 | ANNEALING VALUE E2-4 |
| seed5 | INITIAL VALUE OF seed5 | ANNEALING SOLUTION A1-5 | ANNEALING SOLUTION A2-5 | ANNEALING VALUE E1-5 | ANNEALING VALUE E2-5 |
| seed6 | INITIAL VALUE OF seed6 | ANNEALING SOLUTION A1-6 | ANNEALING SOLUTION A2-6 | ANNEALING VALUE E1-6 | ANNEALING VALUE E2-6 |
| seed7 | INITIAL VALUE OF seed7 | ANNEALING SOLUTION A1-7 | ANNEALING SOLUTION A2-7 | ANNEALING VALUE E1-7 | ANNEALING VALUE E2-7 |
| seed8 | INITIAL VALUE OF seed8 | ANNEALING SOLUTION A1-8 | ANNEALING SOLUTION A2-8 | ANNEALING VALUE E1-8 | ANNEALING VALUE E2-8 |
| seed9 | INITIAL VALUE OF seed9 | ANNEALING SOLUTION A1-9 | ANNEALING SOLUTION A2-9 | ANNEALING VALUE E1-9 | ANNEALING VALUE E2-9 |

# FIG. 9

143

| IDENTIFICATION INFORMATION | HAMMING DISTANCE | DIFFERENCE ($\Delta E$) |
|---|---|---|
| seed0 | D1-0 | $\Delta$E1-0 |
| seed1 | D1-1 | $\Delta$E1-1 |
| seed2 | D1-2 | $\Delta$E1-2 |
| seed3 | D1-3 | $\Delta$E1-3 |
| seed4 | D1-4 | $\Delta$E1-4 |
| seed5 | D1-5 | $\Delta$E1-5 |
| seed6 | D1-6 | $\Delta$E1-6 |
| seed7 | D1-7 | $\Delta$E1-7 |
| seed8 | D1-8 | $\Delta$E1-8 |
| seed9 | D1-9 | $\Delta$E1-9 |
| ... | ... | ... |

# FIG. 10

|  | | $\varsigma$144 |
|---|---|---|
| IDENTIFICATION INFORMATION | HAMMING DISTANCE | DIFFERENCE ($\Delta$E) |
| seed0 | D2-00 | $\Delta$E2-00 |
| seed0 | D2-01 | $\Delta$E2-01 |
| seed0 | D2-02 | $\Delta$E2-02 |
| seed6 | D2-6 | $\Delta$E2-6 |
| ... | ... | ... |

# FIG. 11

```
                    ┌─────────────┐
                    │    START    │
                    └─────────────┘
                           │
                           ▼                          ⌐S101
        ┌──────────────────────────────────────────────┐
        │      RECEIVE INPUT OF OPTIMIZATION PROBLEM     │
        └──────────────────────────────────────────────┘
             │                              │
             ▼           ⌐S102a             ▼              ⌐S102b
    ┌──────────────────────┐      ┌──────────────────────────┐
    │     SET PARAMETER     │      │   SET PARAMETER UNDER     │
    └──────────────────────┘      │   MULTIPLE CONDITIONS     │
             │          ⌐S103a     └──────────────────────────┘
    ┌──────────────────────┐        ⌐S103b       │
    │ CALCULATE SOLUTION USING │   ┌──────────────────────────┐
    │   DEDICATED SOLVER     │    │  CALCULATE SOLUTION USING  │
    └──────────────────────┘     │    ANNEALING MACHINE       │
             │          ⌐S104a     └──────────────────────────┘
    ┌──────────────────────┐          │           ⌐S104b
    │ EXTRACT REFERENCE SOLUTION │ ┌──────────────────────────┐
    │   AND REFERENCE VALUE  │   │   EXTRACT ANNEALING SOLUTION│
    └──────────────────────┘    │   AND ANNEALING VALUE FOR  │
                                │       EACH CONDITION        │
                                └──────────────────────────┘
```

S101 — RECEIVE INPUT OF OPTIMIZATION PROBLEM

S102a — SET PARAMETER

S102b — SET PARAMETER UNDER MULTIPLE CONDITIONS

S103a — CALCULATE SOLUTION USING DEDICATED SOLVER

S103b — CALCULATE SOLUTION USING ANNEALING MACHINE

S104a — EXTRACT REFERENCE SOLUTION AND REFERENCE VALUE

S104b — EXTRACT ANNEALING SOLUTION AND ANNEALING VALUE FOR EACH CONDITION

S105 — COMPARE BIT STATE CORRESPONDING TO REFERENCE SOLUTION WITH BIT STATE CORRESPONDING TO EACH ANNEALING SOLUTION AND CALCULATE HAMMING DISTANCE

S106 — GENERATE PRIMARY SCREENING TABLE IN WHICH IDENTIFICATION INFORMATION (CONDITION), HAMMING DISTANCE, AND ANNEALING VALUE ARE ASSOCIATED WITH EACH OTHER

S107 — SELECT IDENTIFICATION INFORMATION SATISFYING EXTRACTION CONDITION BASED ON PRIMARY SCREENING TABLE

S108 — IS THERE SOLUTION SATISFYING EXTRACTION LEVEL? — NO → S109 RESET PARAMETER

YES

S110 — EXECUTE SECONDARY SCREENING BASED ON IDENTIFICATION INFORMATION CORRESPONDING TO EXTRACTED SOLUTION AND GENERATE SECONDARY SCREENING TABLE

S111 — IS THERE IDENTIFICATION INFORMATION IN WHICH MINIMUM VALUE OF HAMMING DISTANCE IS LESS THAN THRESHOLD VALUE? — NO → S112 RESET PARAMETER

YES

S113 — STORE INITIAL VALUE OF seed WITH MINIMUM VALUE OF HAMMING DISTANCE

END

# FIG. 12

START

S201
RECEIVE INPUT OF SIMILAR
OPTIMIZATION PROBLEM

S202
APPLY STORED PARAMETER

S203
RECEIVE ANOTHER PARAMETER WHEN
USING ANOTHER PARAMETER

S204
CALCULATE SOLUTION USING
ANNEALING MACHINE

S205
DOES SOLUTION
SATISFY CONDITION?

NO

YES

S207
RESET PARAMETER

S206
OUTPUT SOLUTION

END

# FIG. 13

200

COMPUTER

| 201 | 202 | 203 | 204 | 205 |
|-----|-----|-----|-----|-----|
| CPU | INPUT DEVICE | DISPLAY | DEDICATED SOLVER | ANNEALING MACHINE |

206

RAM

206a
RECEPTION PROCESS

206b
FIRST CALCULATION PROCESS

206c
SECOND CALCULATION PROCESS

206d
SPECIFYING PROCESS

206e
SOLUTION PROCESS

207

208

HARD DISK DRIVE

207a
RECEPTION PROGRAM

207b
FIRST CALCULATION PROGRAM

207c
SECOND CALCULATION PROGRAM

207d
SPECIFYING PROGRAM

207e
SOLUTION PROGRAM

Europäisches Patentamt
European Patent Office
Office européen des brevets

## EUROPEAN SEARCH REPORT

Application Number

EP 21 15 3975

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAMEZANIAN REZA ET AL: "Hybrid simulated annealing and MIP-based heuristics for stochastic lot-sizing and scheduling problem in capacitated multi-stage production system", APPLIED MATHEMATICAL MODELLING, vol. 37, no. 7, April 2013 (2013-04), pages 5134-5147, XP055820179, GB ISSN: 0307-904X, DOI: 10.1016/j.apm.2012.10.024 * page 5145 * | 1-9 | INV. G06F17/11 G06N5/00 |
| A | US 2019/220732 A1 (SHIBASAKI TAKAYUKI [JP] ET AL) 18 July 2019 (2019-07-18) * the whole document * | 1-9 | |
| A | HEDAR ABDEL-RAHMAN ET AL: "Hybrid simulated annealing and direct search method for nonlinear unconstrained global optimization", OPTIMIZATION METHODS AND SOFTWARE, vol. 17, no. 5, 27 January 2002 (2002-01-27), pages 891-912, XP055820463, ISSN: 1055-6788, DOI: 10.1080/1055678021000030084 * the whole document * | 1-9 | TECHNICAL FIELDS SEARCHED (IPC) G06F G06N |

The present search report has been drawn up for all claims

| Place of search | Date of completion of the search | Examiner |
|---|---|---|
| Berlin | 2 July 2021 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 3975

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2021

| Patent document cited in search report | | Publication date | Patent family member(s) | | Publication date |
|---|---|---|---|---|---|
| US 2019220732 | A1 | 18-07-2019 | JP 2019125155 A | | 25-07-2019 |
| | | | US 2019220732 A1 | | 18-07-2019 |

EPO FORM P0459

For more details about this annex : see Official Journal of the European Patent Office, No. 12/82

**EP 3 885 941 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019096334 A
- JP 2015191340 A
- JP 2006040220 A